(19) Europäisches Patentamt

European Patent Office

Office européen des brevets

(11) **EP 1 657 532 A1**

(12) **EUROPEAN PATENT APPLICATION**

(43) Date of publication:
**17.05.2006 Bulletin 2006/20**

(51) Int Cl.:
***G01F 1/698*** (2006.01)

(21) Application number: **05018073.6**

(22) Date of filing: **19.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.11.2004 JP 2004327275**

(71) Applicant: **HITACHI, LTD.**
**Chiyoda-ku**
**Tokyo 100-8280 (JP)**

(72) Inventors:
• **Hanzawa, Keiji**
**Hitachinaka-shi**
**Ibaraki 312-0062 (JP)**

• **Matsumoto, Masahiro**
**Chiyoda-ku**
**Tokyo 100-8220 (JP)**
• **Yamada, Hiromichi**
**Chiyoda-ku**
**Tokyo 100-8220 (JP)**
• **Nakano, Hiroshi**
**Chiyoda-ku**
**Tokyo 100-8220 (JP)**
• **Sukesako, Hiroyasu**
**Chiyoda-ku**
**Tokyo 100-8220 (JP)**

(74) Representative: **Beetz & Partner**
**Steinsdorfstrasse 10**
**D-80538 München (DE)**

(54) **Thermal mass flow sensor**

(57) The present invention relates to an air flowmeter in which an air flow rate sensing element and air temperature sensing element are integrated with each other and mounted on a substrate and at the same time the fluid temperature sensing element is formed on a diaphragm, the fluid flowmeter being capable of measuring a fluid flow rate with high accuracy by suppressing the self-heating of the fluid temperature sensing element.

In the invention, an air temperature sensor 11 sensing an air temperature, supplied with a pulse signal as a driving signal from a pulse signal source 19, senses an air temperature based on the pulse signal. While the air temperature sensor 11 is self-heated during an electrical current supplying time period by the pulse signal, it is cooled during an electrical current halting time period. Accordingly, the self-heating of the air temperature sensor 11 by the driving signal is suppressed, and a thermal effect on air flow rate sensing elements 5 to 10 disposed in an air flow downstream side of the air temperature sensor 11 is also reduced.

FIG. 1

**Description**

BACKGROUND OF THE INVENTION

Field of the Invention

The present invention relates to fluid flowmeters measuring an air flow rate, and more particularly to a fluid flowmeter suitable for sensing of an air flow rate sucked into the engine of an automobile.

Background Art

As a conventional technique for air flowmeters being a fluid flowmeter, there is known a flowmeter of air sucked into the engine of an automobile as described in patent document 1, which is a technique of sensing the heating control electrical current value of a heating resistance and converting it to an air flow rate.

There is also known a technique in which temperature-sensitive resistors are arranged in the upper and lower sides of air flow of a heating resistance and the thermal effects on both the temperature-sensitive resistors are sensed as a temperature difference signal and treated as the voltage of a bridge circuit to thereby measure the air flow rate.

Errors can be caused by air temperature in an air flow rate measurement, so there is also known a technique in which an air temperature is measured and a measured flow rate is corrected based on the measured temperature. As for the technique of measuring an air temperature to make the correction, patent document 2 describes a technique in which an air flow rate sensing element and air temperature sensing element are formed on separate diaphragms on a substrate.

As with the technique described in this patent document 2, by arranging an air flow rate sensing element and air temperature sensing element on a substrate and integrating them with each other, cost reduction of the air flowmeter can be achieved.

Also, because of formation of the air temperature sensing element on a diaphragm, the heat capacity of the air temperature sensing element and the member including the substrate part having disposed thereon the air temperature sensing element can be reduced to improve the response with respect to air temperature.

[Patent Document 1] JP Patent Publication (Kokai) No. 60-36916 (1985)

[Patent Document 2] JP Patent Publication (Kokai) No. 6-249693 (1994)

In the above technique described in patent document 2, however, when an air flow rate sensing element and air temperature sensing element are integrated with each other and mounted on a substrate and at the same time the air temperature sensing element is formed on a diaphragm, heat capacity will be small as described above. Consequently, the air temperature sensing element itself can be easily self-heated by the sensing electrical current flowing through the temperature sensing element.

The heat generated by the air temperature sensing element itself is transmitted to the integrated air flow rate sensing element and may bring about adverse effects on the air flow rate sensing signal.

Accordingly, an object of the present invention is to implement a fluid flowmeter in which a fluid flow rate sensing element and fluid temperature sensing element are integrated with each other and mounted on a substrate and at the same time the fluid temperature sensing element is formed on a diaphragm, the fluid flowmeter being capable of measuring a fluid flow rate with high accuracy by suppressing the self-heating of the fluid temperature sensing element, and also to implement an engine system using the same.

SUMMARY OF THE INVENTION

To achieve the above object, the present invention is configured as follows.

A fluid flowmeter according to the present invention may include a temperature sensing element disposed on a first diaphragm formed on a substrate, and/or flow rate sensing elements disposed on a second diaphragm formed on the substrate. A fluid flow rate value sensed by the flow rate sensing elements may be corrected based on a fluid temperature sensed by the temperature sensing element, thereby obtaining a fluid flow rate.

Alternatively, the ignition timing of an engine may be corrected based on the fluid flow rate.

The fluid flowmeter according to the present invention may include a pulse signal source supplying a temperature sensing pulse signal to the temperature sensing element. Based on a temperature sensing signal from the temperature sensing element driven by the temperature sensing pulse signal, a fluid flow rate may be corrected, or the ignition timing of an engine may be corrected.

Since the temperature sensing element is driven by the pulse signal, the self-heating of the temperature sensing element is suppressed and the generation of temperature sensing errors caused by the self-heating is suppressed.

The above flow rate sensing element may further include a heating resistance element, first temperature-sensitive resistance elements disposed in the fluid upstream side of the heating resistance element, and/or second temperature-sensitive resistance elements disposed in the fluid downstream side of the heating resistance element. A fluid flow rate is measured based on the change of resistance of the first temperature-sensitive resistance elements and the second temperature-sensitive resistance elements.

An engine control system according to the present invention may include an air flowmeter for sensing the flow rate and temperature of air supplied to an automobile engine, and/or engine control means for controlling the flow rate of air and the consumption of fuel supplied to the engine based on the air flow rate and air temperature measured by the air flowmeter.

The air flowmeter may include a temperature sensing element disposed on a first diaphragm formed on a substrate, a pulse signal source supplying a temperature sensing pulse signal to the temperature sensing element, and/or flow rate sensing elements disposed on a second diaphragm formed on the substrate.

Based on a temperature sensing signal from the temperature sensing element driven by the temperature sensing pulse signal, engine control means may correct a fluid flow rate sensed by the flow rate sensing elements, or may correct the ignition timing of the engine.

Also, based on a temperature sensing signal from the temperature sensing element driven by the temperature sensing pulse signal, air flow rate adjusting means of the air flowmeter may correct a fluid flow rate sensed by the flow rate sensing elements, or may correct the ignition timing of the engine.

Consequently, it is possible to implement a fluid flowmeter in which an air flow rate sensing element and fluid temperature sensing element are integrated with each other and mounted on a substrate and at the same time the fluid temperature sensing element is formed on a diaphragm, the fluid flowmeter being capable of measuring a fluid flow rate with high accuracy by suppressing the self-heating of the fluid temperature sensing element, and also to implement an engine system using the same.

Since the self-heating of the temperature sensing element can be suppressed, it is possible to make the temperature sensing signal highly accurate, and there is no need to increase the resistance value of the temperature sensing element. Accordingly, an advantageous effect of enabling reduction of the influence caused by contamination is also obtained.

Also, by correcting the flow rate dependence of the temperature sensing element by use of the flow rate sensing signal supplied by the flow rate sensing element, an advantageous effect such that the fluid temperature can be accurately sensed is obtained.

BRIEF DESCRIPTION OF THE DRAWINGS

FIG. 1 is a schematic configuration diagram of a sensing section of an air flowmeter according to a first embodiment of the present invention;
FIG. 2 is a diagram showing the planar structure of a sensing element of the air flowmeter according to the first embodiment of the present invention;
FIG. 3 is a diagram showing the sectional structure of the sensing element of the air flowmeter according to the first embodiment of the present invention;
FIG. 4 is a diagram explaining the response of a temperature sensor of the air flowmeter according to the present invention;
FIG. 5 is a diagram showing error reduction effects provided by pulse-driving the temperature sensor of the air flowmeter according to the present invention;
FIG. 6 is a diagram showing error reduction effects provided by pulse-driving the temperature sensor of the air flowmeter according to the present invention;
FIG. 7 is a diagram explaining how the self-heating of the temperature sensor of the air flowmeter of the present invention is dependent on air flow rate;
FIG. 8 is a schematic configuration diagram of a sensing section of an air flowmeter according to a second embodiment of the present invention;
FIG. 9 is a schematic sectional diagram in a state where the air flowmeter of the present invention is actually used;
FIG. 10 is a diagram showing the output characteristic of the air temperature sensor 11 relative to air flow rate;
FIG. 11 is a schematic configuration diagram of a sensing section of an air flowmeter according to a third embodiment of the present invention;
FIG. 12 is a schematic configuration diagram of an engine control system in which the third embodiment of the present invention is used; and
FIG. 13 is a schematic configuration diagram of a sensing section of an air flowmeter according to a fourth embodiment of the present invention.

DETAILED DESCRIPTION OF THE PREFERRED EMBODIMENTS

Embodiments of the present invention will be described below with reference to the accompanying drawings. It is noted that the embodiments described below are examples in which a fluid flowmeter according to the present invention is applied to an air flowmeter.

(First embodiment)

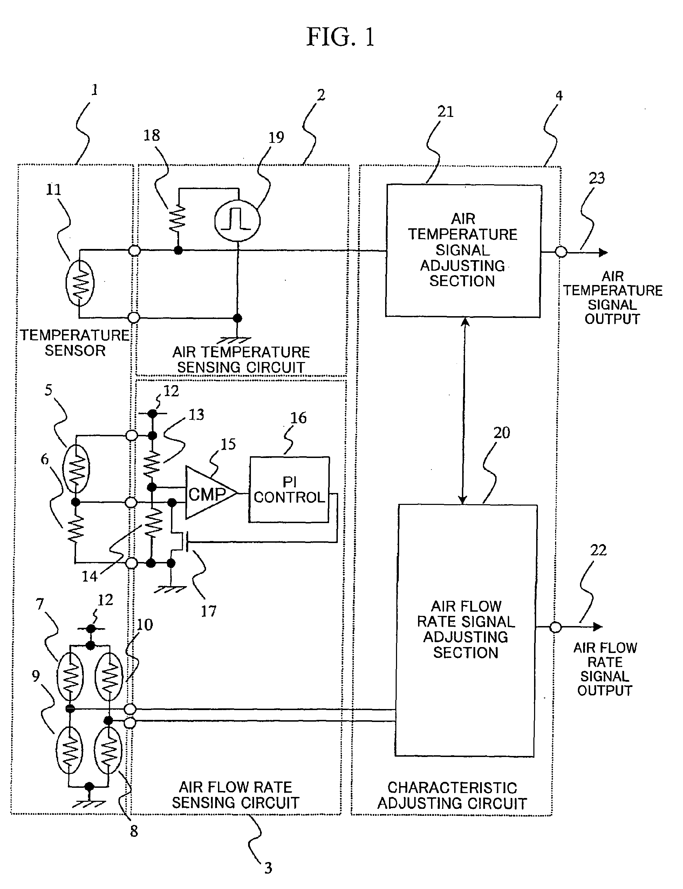

FIG. 1 is a schematic configuration diagram of a sensing section of an air flowmeter according to a first embodiment of the present invention.

Referring to FIG. 1, an air flowmeter of the present invention includes a sensing element 1, exposed to the interior of an air passage pipe, sensing an air flow rate and air temperature, an air temperature sensing circuit 2 for sensing the air temperature, an air flow rate sensing circuit 3 for converting the air flow rate into an electrical signal, and a characteristic adjusting circuit 4 for adjusting the sensing signal to a predetermined characteristic.

The sensing element 1 includes a temperature sensor 11 sensing an air temperature, a heating resistance 5 and side temperature resistance 6 for sensing an air flow rate, and temperature-sensitive resistances 7 to 10, disposed in the upstream and downstream sides of air flow of the heating resistance, whose resistance value varies in response to the thermal effect from the heating resistance 5.

The air temperature sensing circuit 2 includes a fixed resistor 18 and sensing signal source 19.

The air flow rate sensing circuit 3 includes a constant voltage power supply 12, fixed resistors 13 and 14, a comparator 15, a PI control circuit 16, and a MOS transistor 17.

Also, the characteristic adjusting circuit 4 includes an air flow rate signal adjusting section 20 and air temperature signal adjusting section 21.

The air temperature sensor 11 of the sensing element 1 is connected in series to the fixed resistor 18 of the air temperature sensing circuit 2. A pulsed sensing signal from the signal source 19 is applied to the air temperature sensor 11.

The electrical potential level observed at the connecting point of the air temperature sensor 11 and fixed resistor 18 constitutes an air temperature sensing signal, which is supplied to the air temperature signal adjusting section 21. This signal is then adjusted to a predetermined characteristic by the air temperature signal adjusting section 21 and outputted to, for example, an engine control unit as an air temperature signal via an output terminal 23.

The heating resistance 5 of the sensing element 1 constitutes a bridge circuit, together with the side temperature resistance 6 and the fixed resistors 13 and 14 within the air flow rate sensing circuit 3. A differential signal of the bridge circuit is detected by the comparator 15; the MOS transistor 17 is turned on and off by a control signal generated by the PI control circuit 16; and a feedback control is performed so that the heating temperature of the heating resistance 5 has a constant value.

The bridge circuit is constituted of: the temperature-sensitive resistances 7 and 8, disposed in the upstream side of air flow of the heating resistance 5, whose resistance value varies in response to the thermal effect from the heating resistance 5; and temperature-sensitive resistances 9 and 10 disposed in the downstream side of air flow of the heating resistance 5. A differential signal generated in response to air flow rate is detected by the bridge circuit, and the detected differential signal is supplied to the air flow rate signal adjusting section 20. This differential signal is adjusted to a predetermined characteristic by the air flow rate signal adjusting section 20. Specifically, the air flow rate is corrected based on the air temperature sensed by the air temperature sensor 11. Then the corrected air flow rate is outputted to, for example, an engine control unit as an air flow rate signal via an output terminal 22.

In the engine control unit, in order to determine an optimum ignition timing of the engine, the above-described air temperature signal and air flow rate signal are used.

The heating resistance 5 is driven by a pulse signal source. The sensing signal source 19 being a pulse signal source can be used as this pulse signal source. Accordingly, a single driving source can be used for both the air temperature sensor 11 and heating resistance 5, whereby the circuit configuration can be simplified.

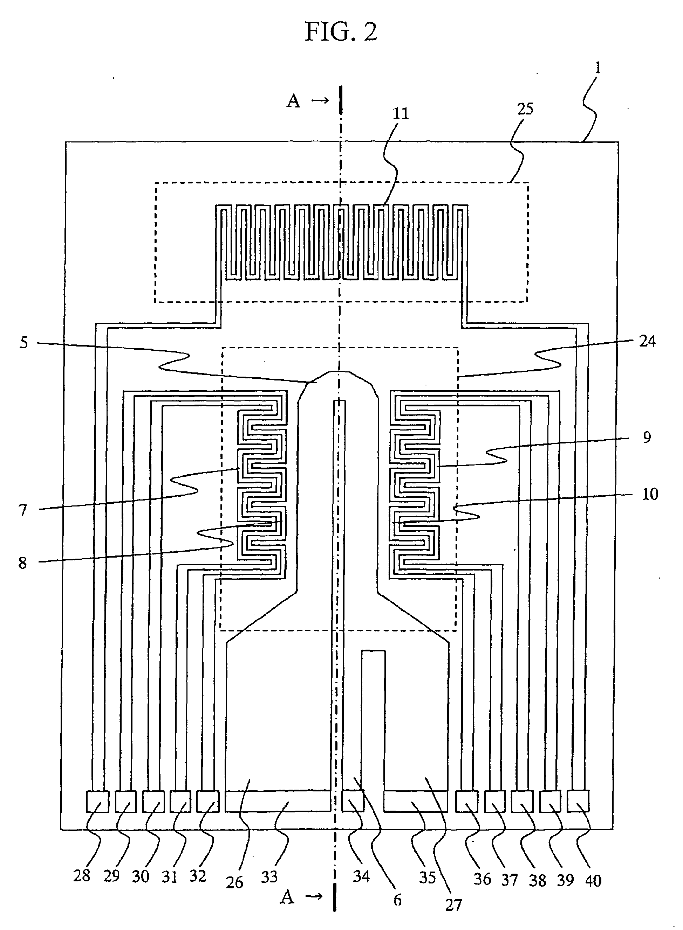

FIG. 2 is a diagram showing the planar structure of the sensing element 1 according to an embodiment of the present invention.

Referring to FIG. 2, in the sensing element 1, there are formed an air flow rate sensing diaphragm 24 having disposed thereon the air flow rate sensing resistances 5 to 10, and an air temperature sensing diaphragm 25 having disposed thereon the air temperature sensor 11.

The heating resistance 5 is withdrawn by a wiring pattern 26 to a position where a terminal 33 is disposed. The connecting point of the heating resistance 5 and side temperature resistance 6 is withdrawn by a wiring pattern 27 to a position where a terminal 35 is disposed.

The heating resistance 5, side temperature resistance 6, temperature-sensitive resistances 7 to 10, and air temperature sensor 11 are made of a platinum film or polysilicon film whose resistance value varies according to temperature. The resistances 5 to 10 and sensor 11 are connected to the outside via terminals 28 to 40.

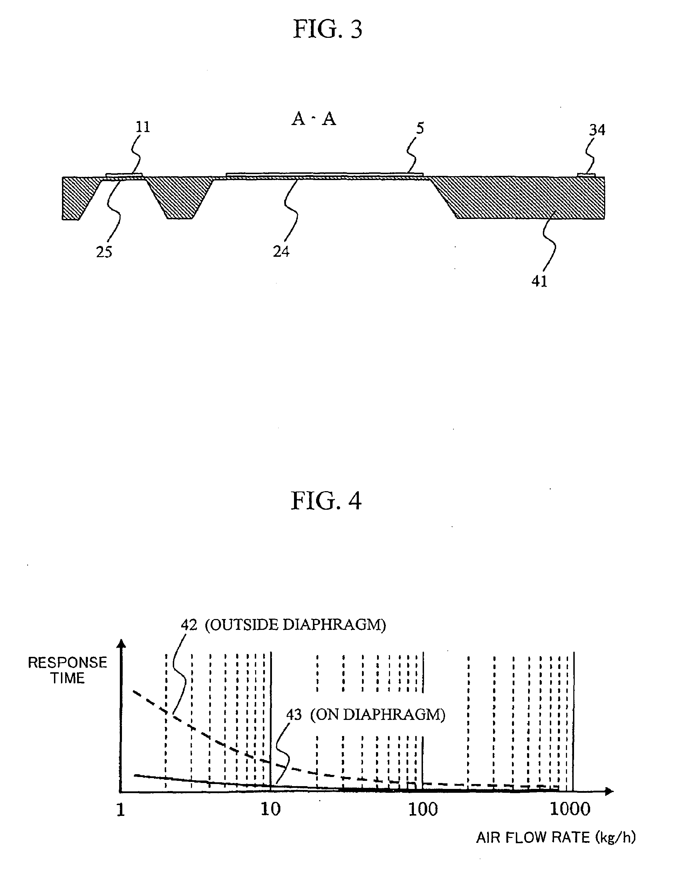

FIG. 3 is a sectional view along the line A-A shown in the plan view of FIG. 2.

Referring to FIG. 3, there are formed two diaphragms 24 and 25 obtained by applying an etching process with an alkaline solvent or the like to the back side of a substrate 41 of single-crystal silicon or the like. On the respective diaphragms, there are formed the heating resistance 5 and temperature sensor 11.

FIG. 4 is a graph showing the response of the temperature sensor 11 relative to air flow rate. In FIG. 4, indicated by a broken line 42 is a performance in a case where the temperature sensor 11 is not formed on the diaphragm 25; indicated by a solid line 43 is a performance in a case where the temperature sensor 11 is formed on the diaphragm 25.

When the temperature sensor 11 is not formed on the diaphragm 25, it has a performance shown by the response 42; when the air flow rate is small, the response time is particularly delayed.

As means for eliminating the response time delay, the temperature sensor 11 is formed on the diaphragm 25. Consequently, the heat capacity of the temperature sensor 11 and the member having disposed thereon the temperature sensor 11 can be reduced, thus enabling the improvement of the response as shown by the response 43.

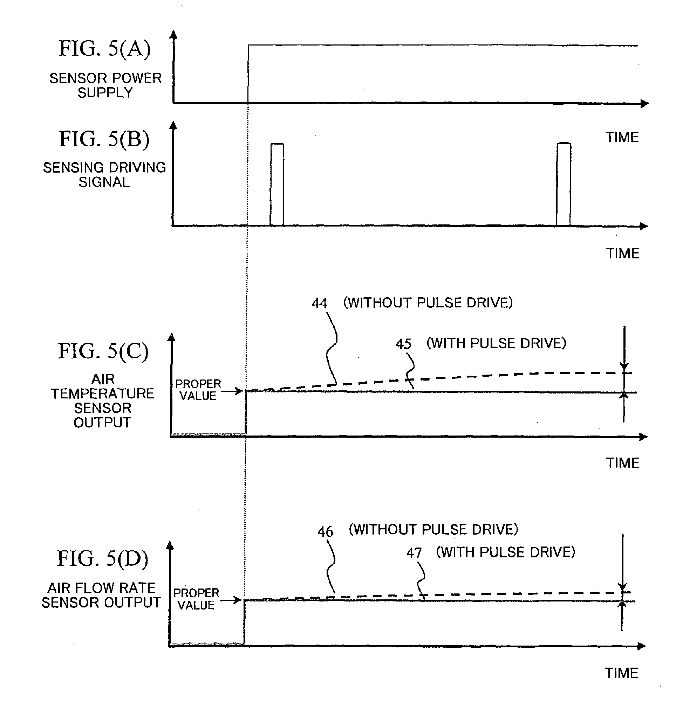

FIG. 5 is a diagram showing the output signals of the air temperature sensor 11 and air flow rate sensors 5 to 10 upon the application of operating power in a case where those sensors are integrated with each other as with the sensing element 1 shown in FIG. 2.

FIG. 5(A) shows an output waveform when the output voltage from the power supply of the temperature sensor 11 is successively made constant. FIG. 5(B) shows an output waveform when the output voltage from the power supply of the temperature sensor 11 is made pulsative.

FIG. 5(C) shows the output signal waveforms of the temperature sensor when the power supply output voltage is successively made constant and when it is made pulsative. FIG. 5(D) shows the output signal waveforms of the air flow rate sensor when the power supply output voltage is successively made constant and when it is made pulsative.

As shown in FIG. 5, when the power supply voltage of the temperature sensor 11 is not made pulsative but made constant successively, the output of the temperature sensor 11 gradually rises as indicated by a broken line 44 at the same time when the operating power is applied.

This is because the air temperature sensor 11 cannot sense an air temperature accurately due to its self-heating by the constant power supply voltage. In particular, when the temperature sensor 11 is formed on the diaphragm 25 for the purpose of improving the response as shown in FIGS. 2 and 3, the heat capacity is small, so the temperature rise by the self-heating becomes significant.

Also, under the influence of the self-heating of the temperature sensor 11, the sensing signal of the air flow rate sensor neighboring the downstream side of air flow also deviates from a proper value to have an error as indicated by a broken line 46.

This is because the air flow rate sensor, constituted of a resistance element whose resistance value varies according to ambient temperature, is susceptive to the thermal effect generated from the temperature sensor 11.

To solve this problem, with the present invention, a pulse signal is supplied to the air temperature sensor 11 to sense an air temperature, thereby reducing the self-heating of the temperature sensor 11.

With such configuration, the output of the temperature sensor 11 and that of the air flow rate sensor 3 are approximately identical to a proper value as indicated by solid lines 45 and 47 shown in FIGS. 5(C) and 5(D), respectively, thus allowing a highly accurate measurement.

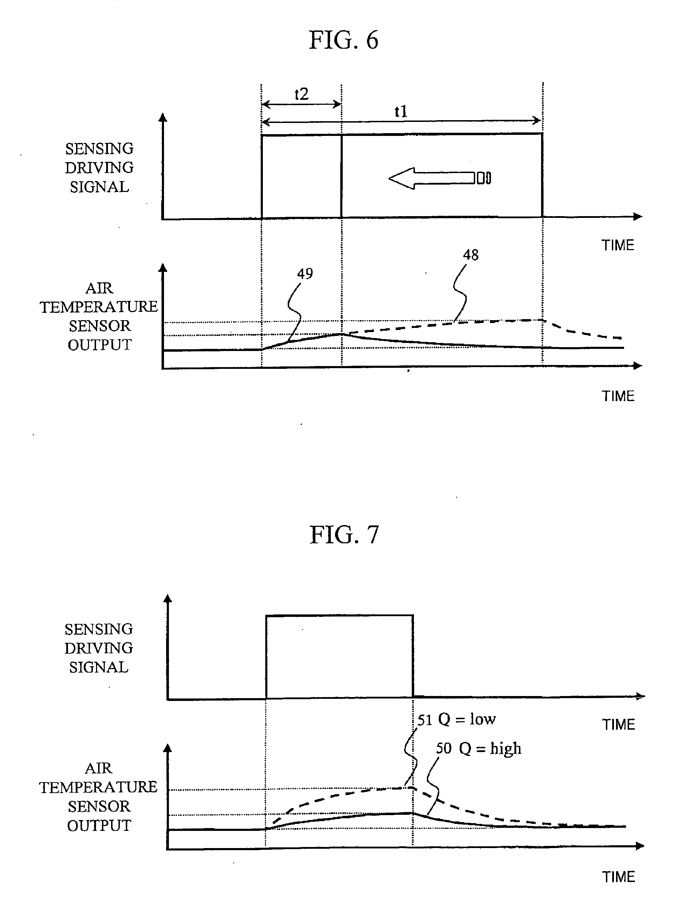

FIG. 6 is a diagram showing the self-heating of the air temperature sensor 11 caused by the applying time period of the sensing pulse signal applied to the air temperature sensor 11.

Referring to FIG. 6, when the applying time period of the sensing pulse signal is long as indicated by t1, the output of the air temperature sensor 11 has a large sensing error due to the gradual self-heating as indicated by a broken line 48. As the temperature sensing error of the air temperature sensor 11 becomes large, the air flow rate sensor 3 is subjected to more influence.

However, when the pulse time period is shortened as indicated by t2 which is equal to or less than half of applying time period t1 shown in FIG. 6, the self-heating is reduced at time t2 or later as indicated by a solid line 49, thus lessening the influence of self-heating.

This pulse time period is preferably set to a value smaller than the thermal time constant of the temperature sensor 11.

Since the change of air temperature is slow relative to the change of air flow rate, when a combination with an pulse-drive air flowmeter using PI control is employed as with the one embodiment of the present invention, the pulse applying cycle time of the air temperature sensing pulse signal may be longer than that of the air flow rate sensing pulse signal. If so, the burden of the sensing circuit can be reduced.

(Second embodiment)

FIG. 7 is a diagram showing how the self-heating of the temperature sensor 11 is dependent on air flow rate.

Referring to FIG. 7, if the air flow rate is large, even when the air temperature sensor 11 is self-heated, it is cooled by the air, so no large temperature rise occurs as indicated by a solid line 50 shown in FIG. 7.

Meanwhile, if the air flow rate is small, the cooling effect of the air temperature sensor 11 by the air is small, so the temperature rises even with the same pulse applying time period as shown by a broken line 51.

The second embodiment of the present invention is an example in which the pulse time period of the pulse signal supplied to the air temperature sensor 11 is varied according to air flow rate, thereby varying a duty ratio.

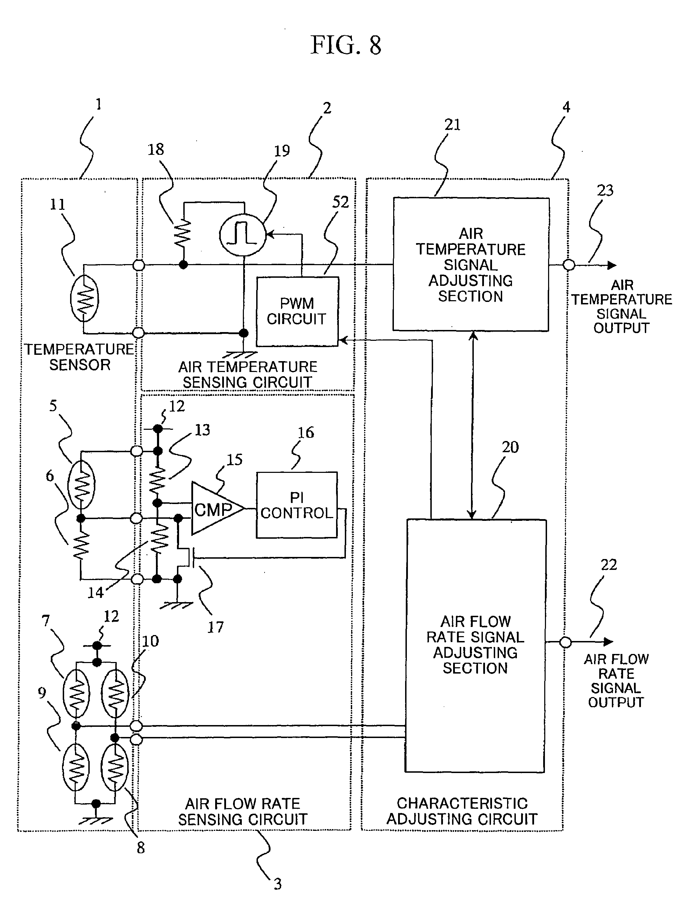

FIG. 8 is a schematic configuration diagram of a sensing section of an air flowmeter according to the second embodiment of the present invention.

The second embodiment has a circuit configuration approximately similar to that shown in FIG. 1, and is different in that the duty ratio of a pulse signal outputted by the sensing signal source 19 is varied according to a signal outputted from a PWM (pulse width modulation) circuit 52 based on an air flow rate signal generated by the air flow rate signal adjusting section 20.

Specifically, the pulse time period of the pulse sensing signal for driving the temperature sensor 11 is varied according to air flow rate.

With this configuration, an optimum pulse time period of the air temperature sensing signal can be set according to air flow rate. Specifically, a pulse width employed when the air flow rate is small can be made smaller than that employed when the air flow rate is large. In other words, a duty ratio employed when the air flow rate is small is made larger than that employed when the air flow rate is large.

It is noted here that, as for the pulse width, the duty ratio is preferably equal to or less than 50 % and as small as possible in view of the self-heating of the temperature sensor 11. In view of the response, however, while being equal to or less than 50 %, the duty ratio is preferably as large as possible.

Consequently, according to air flow rate, the pulse width is increased up to a limit which is determined by the relationship with the self-heating of the air temperature sensor 11. The lower limit of the pulse width is approximately 1 μsec in view of the response; in view of self-heating, the upper limit is a width in which the duty ratio is equal to or less than 50 %.

In addition to the above-mentioned variation of self-heating caused by air flow rate, there is another problem. Specifically, in an air flowmeter disposed within the engine room of an automobile, the temperature sensing sensor 11 can sense a higher temperature than the actual air temperature under the thermal effect from the engine.

The temperature effect from the engine also varies depending on the air flow rate flowing through the air passage pipe, thereby causing a problem of making it difficult to sense an air temperature accurately.

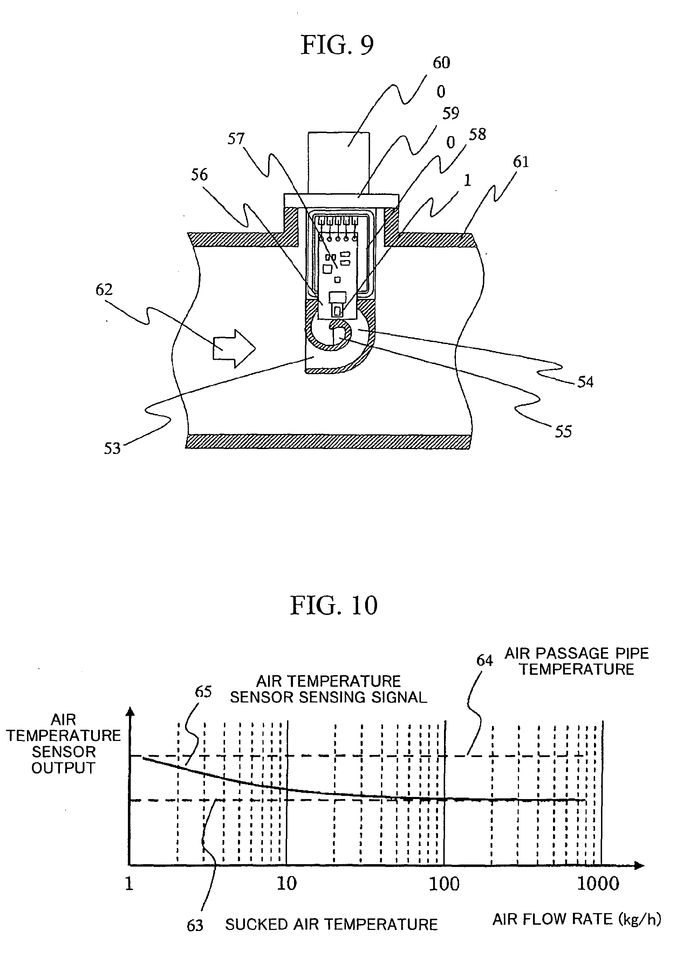

FIG. 9 is a schematic sectional diagram in a state where the air flowmeter of the present invention is actually used.

Referring to FIG. 9, an air flowmeter 60 is inserted into an air passage pipe 61 (intake air pipe) to be mounted and secured to the air passage pipe 61 by a flange 59.

In a housing 58, there is provided a circuit board 56 having a sensing element 1 and circuit element 57 mounted thereon.

Air flow 62, flowing through the intake air pipe 61, is distributed into the air flowmeter 60 by an air intake port 53, bypassed via a bypass passage 54 to pass on a sensing element 1, and returned to the main passage pipe 61 from a bypass exit port 55.

In such actual usage environment, heat generated by the engine can reach the air flowmeter 60 through the passage pipe 61, giving a temperature effect to the sensing element 1.

FIG. 10 is a diagram showing the output characteristic of the air temperature sensor 11 relative to air flow rate. When an air passage pipe temperature 64 (broken line) is higher than an air temperature 63 (broken line), a sensing signal 65 (solid line) of the air temperature sensor 11 gets closer to the air passage pipe temperature 64 in the low flow rate side, and to the suction air temperature 63 in the high flow rate side.

This is because, when a small amount of air flows, the cooling effect by the air is small, so the sensing signal is susceptible to the temperature from the passage pipe 61, and meanwhile, in the high flow rate side, the sensing signal gets closer to the air temperature due to cooling by the air.

With the second embodiment of the present invention, as shown in FIG. 8, a correction based on air flow rate is applied to the air temperature signal in the air temperature signal adjusting section 21 by use of the air flow rate signal sensed and adjusted by the air flow rate signal adjusting section 20. Accordingly, such flow rate dependence of the air temperature sensor 11 can be corrected.

(Third embodiment)

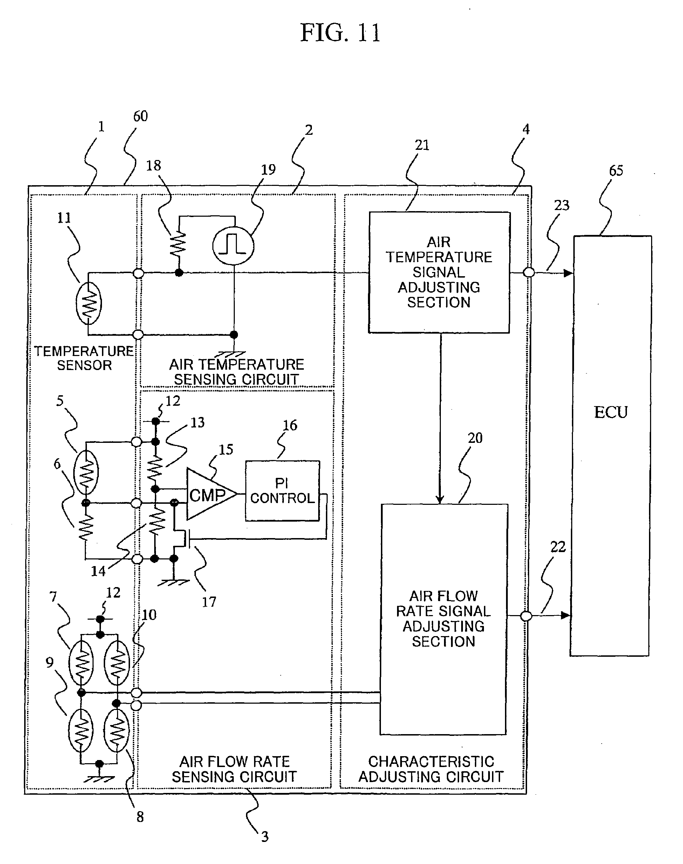

FIG. 11 is a diagram showing a third embodiment of the present invention. The third embodiment is an example in which the present invention is applied to an engine control system, and the correction of the air flow rate dependence of the air temperature sensor 11 in the first embodiment is made by a computer (ECU) 65 in the engine control system. With this configuration, the correction of air flow rate or the correction of the ignition timing of engine can be simplified.

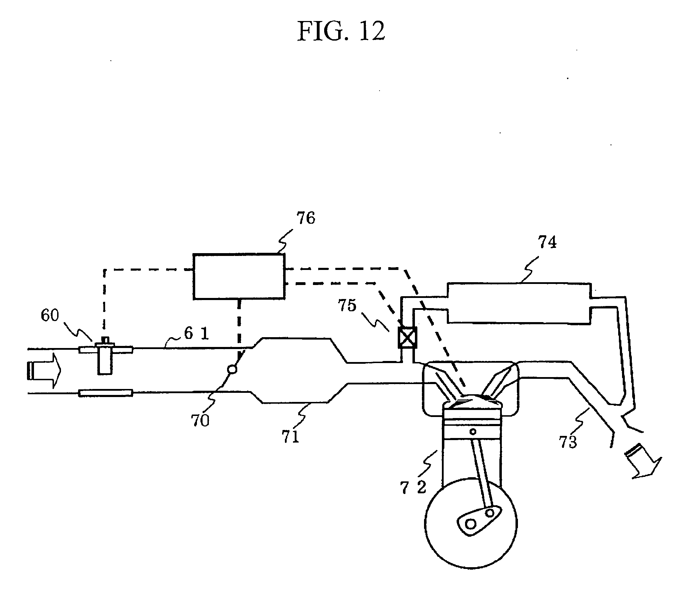

FIG. 12 is a schematic diagram showing an overall configuration of an engine control system according to the third embodiment.

Referring to FIG. 12, an air flowmeter 60 is attached to an air passage pipe 61; intake air is supplied to an engine 72 via an intake manifold 71; the amount of air supplied to the engine 72 is adjusted by a throttle valve 70.

Exhaust gas from the engine 72 is emitted via an exhaust air duct 73. Part of the exhaust gas from the exhaust air duct 73 is cooled by an EGR 74 and circulated to the engine 72; recirculation is controlled by an EGR valve 75. Based on an output signal from the air flowmeter 60, an ECU 76 controls the opening of the throttle valve 70 and the operation of the engine 72 to have an optimum air oil ratio.

Also, the ECU 76 controls the opening and closing of the EGR valve 75 to have an optimum recirculation of exhaust gas.

(Fourth embodiment)

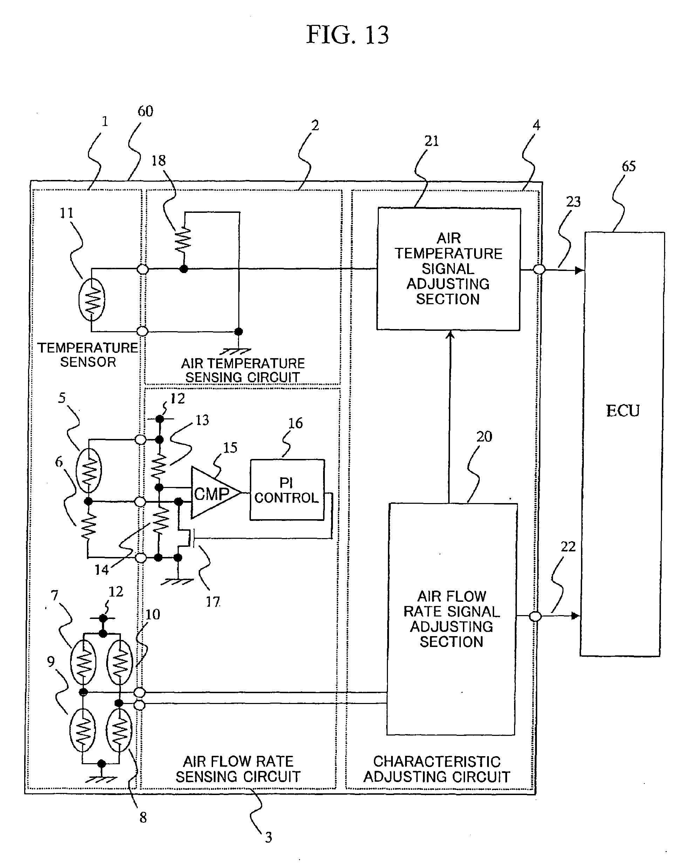

FIG. 13 is a schematic configuration diagram of a sensing section of an air flowmeter according to a fourth embodiment of the present invention.

Different from the embodiments 1 to 3, the fourth embodiment supplies not a pulse signal but a direct current to the temperature sensor 11. Thus, in an example of FIG. 13, no pulse signal source 19 is provided. Other constituent parts of the example shown in FIG. 13 are similar to those of the example shown in FIG. 11.

Accordingly, the temperature sensor 11 is self-heated; the self-heating causes a sensed temperature to have an error.

If the air flow rate signal is f (q) and an air temperature is T (air flow rate q), the air temperature sensing signal f (T) is expressed by the following equation (1).

$$f(T) = (aT^b + c)/f(q) + d \qquad (1)$$

where a, b, c, and d are constants and can be predetermined for each air flowmeter.

As expressed by the above equation (1), the air temperature signal is a function of air flow rate.

Accordingly, by using the sensing signal f (q) sensed by the air flow rate sensing section 3 and the air temperature sensing signal f (T) sensed by the air temperature sensing section 2, a proper air temperature can be calculated according to the following equation (2).

$$T = ((d\,f\,(T)\,f\,(q) - c)/a)^{1/b} \qquad (2)$$

The above equation (2) is calculated in the air temperature adjusting section 21, and the air flow rate is corrected by use of the calculated proper value.

With the fourth embodiment, a temperature sensing error caused by the self-heating of the temperature sensor 11 can be corrected.

The present invention can be applied not only to an apparatus for measuring an air flow rate supplied to the engine of an automobile but also to other devices and systems.

Specifically, the present invention can be applied to apparatuses for sensing an air flow rate and air temperature, including an apparatus for an airplane or ship for sensing the flow rate of a medium other than air, such as hydrogen, which must have a high reliability.

It is noted that the heating resistance 5 of the air flow rate sensing circuit 3 can be driven by a direct-current voltage source, or can alternatively be driven by a pulse signal source.

The present invention can be applied not only to an air flowmeter but also to an apparatus for measuring the flow rate of other gases (hydrogen, oxygen, nitrogen gas, and so on).

The above described exemplary embodiments can be combined in any way as a whole or in part in order to build up further embodiments optimized for the respective application. As far as such modifications of the above described embodiments are readily apparent for the skilled person they shall be disclosed implicitly by the above description of embodiments 1 to 4.

**Claims**

1. A fluid flowmeter for measuring a fluid flow rate by use of a flow rate sensing element, the fluid flowmeter comprising:

   a temperature sensing element (11) disposed on a first diaphragm (25) formed in a substrate (41); and
   a pulse signal source (19) supplying a temperature sensing pulse signal to the temperature sensing element (11),

   wherein the flow rate sensing element (5, 7 - 10) is disposed on a second diaphragm (24) formed on the substrate (41).

2. The fluid flowmeter according to claim 1, wherein the flow rate sensing element includes:

   a heating resistance element (5); a first temperature-sensitive resistance element (7, 8) disposed in a fluid upstream side of the heating resistance element (5); and a second temperature-sensitive resistance element (9, 10) disposed in a fluid downstream side of the heating resistance element (5),
   wherein a fluid flow rate is measured based on the change of resistance of the first temperature-sensitive resistance element (7, 8) and second temperature-sensitive resistance element (9, 10).

3. The fluid flowmeter according to claim 2, wherein a heating pulse signal is supplied to the heating resistance element (5), and a control is performed so that the heating resistance element (5) is heated at a constant temperature.

4. The fluid flowmeter according to claim 3, wherein the cycle time of the temperature sensing pulse signal is longer than that of the heating resistance pulse signal.

5. The fluid flowmeter according to claim 3, wherein, to the heating resistance element (5), there is supplied a pulse signal from the pulse signal source (19) supplying a pulse signal to the temperature sensing element (11).

6. The fluid flowmeter according to at least one of claims 1 to 5, wherein a duty ratio of the temperature sensing pulse signal is varied according to the measured fluid flow rate.

7. A fluid flowmeter comprising:

   a temperature sensing element (11) disposed on a first diaphragm (25) formed in a substrate (41),
   and a flow rate sensing element disposed on a second diaphragm (24) in the substrate (41),
   wherein a fluid flow rate sensed by the flow rate sensing element is corrected using a fluid temperature sensed by the temperature sensing element (11) so as to measure the fluid flow rate,
   the fluid flowmeter further including a pulse signal source (19) supplying a temperature sensing pulse signal to the temperature sensing element (11), wherein the fluid flow rate is corrected using sensing signal from the temperature sensing element (11), which is driven by the temperature sensing pulse signal.

8. The fluid flowmeter according to claim 7, wherein the flow rate sensing element includes: a heating resistance element (5); a first temperature-sensitive resistance element (7, 8) disposed in a fluid upstream side of the heating resistance element (5); and a second temperature-sensitive resistance element (9, 10) disposed in a fluid downstream side of the heating resistance element (5),
wherein a fluid flow rate is measured based on the change of resistance of the first temperature-sensitive resistance element (7, 8) and second temperature-sensitive resistance element (9, 10).

9. The fluid flowmeter according to claim 8, wherein a heating pulse signal is supplied to the heating resistance element (5), and a control is performed so that the heating resistance element (5) is heated at a constant temperature.

10. The fluid flowmeter according to claim 9, wherein the cycle time of the temperature sensing pulse signal is longer than that of the heating resistance pulse signal.

11. The fluid flowmeter according to claim 9, wherein, to the heating resistance element (5), there is supplied a pulse signal from the pulse signal source (19) supplying a pulse signal to the temperature sensing element (11).

12. The fluid flowmeter according to at least one of claims 7 to 11, wherein a duty ratio of the temperature sensing pulse signal is varied according to the measured fluid flow rate.

13. The fluid flowmeter according to claims 6 or 12, wherein the duty ratio is varied between 50 % or less and a minimum value determined from a temperature sensing sensitivity.

14. An engine control system comprising: an air flowmeter (60) for sensing a flow rate and temperature of air supplied to an automobile engine (72); and engine control means (76) for controlling an air flow rate and fuel consumption supplied to the engine (72) based on the air flow rate and air temperature measured by the air flowmeter (60), wherein: the air flowmeter (60) includes: a temperature sensing element (11) disposed on a first diaphragm (25) formed on a substrate (41); a pulse signal source (19) supplying a temperature sensing pulse signal to the temperature sensing element (11); and a flow rate sensing element (5, 7 - 10) disposed on a second diaphragm (24) formed on the substrate (41); and
a fluid flow rate sensed by the flow rate sensing element (5, 7 - 10) or an ignition timing of the engine (72) is corrected based on the temperature sensing signal from the temperature sensing element (11) driven by the temperature sensing pulse signal.

15. An engine control system comprising: an air flowmeter (60) for sensing the flow rate and temperature of air supplied to an automobile engine (72); and engine control means (76) for controlling the air flow rate and fuel consumption supplied to the engine (72) based on the air flow rate and air temperature measured by the air flowmeter (60), wherein the air flowmeter (60) includes: a temperature sensing element (11) disposed on a first diaphragm (25) formed on a substrate (41); a pulse signal source (19) supplying a temperature sensing pulse signal to the temperature sensing element (11); a flow rate sensing element (5, 7 - 10) disposed on a second diaphragm (24) formed on the substrate (41); and air flow rate adjusting means (20) for correcting a fluid flow rate sensed by the flow rate sensing element based on the temperature sensing signal from the temperature sensing element (11) driven by the temperature sensing pulse signal.

16. The engine control system according to claim 13 or 14, wherein the duty ratio of the temperature sensing pulse signal is varied according to the measured air flow rate.

# FIG. 1

TEMPERATURE SENSOR

AIR TEMPERATURE SENSING CIRCUIT

CMP

PI CONTROL

AIR FLOW RATE SENSING CIRCUIT

AIR TEMPERATURE SIGNAL ADJUSTING SECTION

AIR TEMPERATURE SIGNAL OUTPUT

AIR FLOW RATE SIGNAL ADJUSTING SECTION

AIR FLOW RATE SIGNAL OUTPUT

CHARACTERISTIC ADJUSTING CIRCUIT

## FIG. 2

# FIG. 3

A · A

# FIG. 4

FIG. 5(A)

SENSOR POWER
SUPPLY

TIME

FIG. 5(B)

SENSING DRIVING
SIGNAL

TIME

44   (WITHOUT PULSE DRIVE)

45   (WITH PULSE DRIVE)

FIG. 5(C)

AIR
TEMPERATURE
SENSOR
OUTPUT

PROPER
VALUE

TIME

46   (WITHOUT PULSE DRIVE)

47   (WITH PULSE DRIVE)

FIG. 5(D)

AIR FLOW RATE
SENSOR OUTPUT

PROPER
VALUE

TIME

## FIG. 6

## FIG. 7

# FIG. 8

# FIG. 9

# FIG. 10

# FIG. 11

# FIG. 12

# FIG. 13

European Patent Office

**EUROPEAN SEARCH REPORT**

Application Number

EP 05 01 8073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 5 452 610 A (KLEINHANS ET AL) 26 September 1995 (1995-09-26) * column 2, line 52 - line 59; figure 1 * * column 3, line 10 - line 45 * ----- | 1-16 | INV. G01F1/698 |
| Y | EP 1 441 206 A (DWYER INSTRUMENTS, INC) 28 July 2004 (2004-07-28) * paragraph [0022] * * paragraph [0026] * ----- | 1-16 | |
| Y | PATENT ABSTRACTS OF JAPAN vol. 2002, no. 03, 3 April 2002 (2002-04-03) & JP 2001 324364 A (HITACHI LTD; HITACHI CAR ENG CO LTD), 22 November 2001 (2001-11-22) * abstract * * paragraph [0021]; figure 2 * ----- | 2-6, 13-16 | |
| Y | US 6 412 471 B1 (TRUBLOWSKI JOHN ET AL) 2 July 2002 (2002-07-02) * column 3, line 30 - line 33 * * column 3, line 40 - line 43 * * column 3, line 60 - line 67 * ----- | 14-16 | TECHNICAL FIELDS SEARCHED (IPC)  G01F F02D |

The present search report has been drawn up for all claims

| Place of search | Date of completion of the search | Examiner |
|---|---|---|
| The Hague | 21 March 2006 | Gagin, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 657 532 A1**

## ANNEX TO THE EUROPEAN SEARCH REPORT
## ON EUROPEAN PATENT APPLICATION NO.

EP 05 01 8073

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2006

| Patent document cited in search report | | Publication date | Patent family member(s) | | Publication date |
|---|---|---|---|---|---|
| US 5452610 | A | 26-09-1995 | JP | 6249693 A | 09-09-1994 |
| EP 1441206 | A | 28-07-2004 | CA<br>JP | 2455102 A1<br>2004219424 A | 16-07-2004<br>05-08-2004 |
| JP 2001324364 | A | 22-11-2001 | WO | 03012376 A1 | 13-02-2003 |
| US 6412471 | B1 | 02-07-2002 | NONE | | |

EPO FORM P0459

For more details about this annex : see Official Journal of the European Patent Office, No. 12/82

20